# EUROPEAN PATENT SPECIFICATION

(11) **EP 3 402 701 B1**
(45) Date of publication and mention of the grant of the patent: **15.05.2019**
(21) Application number: 16831527.3
(22) Date of filing: 30.12.2016
(51) Int. Cl.: B60R 22/32, B26B 27/00

(54) **SEAT BELT CUTTING DEVICE**
SITZGURTSCHNEIDVORRICHTUNG
DISPOSITIF DE COUPE DE CEINTURE DE SÉCURITÉ

(30) Priority: 13.01.2016 PT 2016109083
(43) Date of publication of application: 21.11.2018
(73) Proprietor: Di Pietro, Giovanni, 4440-038 Valongo (PT)
(72) Inventor: Di Pietro, Giovanni, 4440-038 Valongo (PT)
(74) Representative: Pereira da Cruz, Joao
(86) International application number: PCT/IB2016/058113
(87) International publication number: WO 2017/122079

(56) References cited:
- DE-A1- 3 530 363
- DE-A1- 19 853 806
- FR-A1- 2 605 568

## Description

### Field of the invention

The present invention consists of a seat belt cutting device, applicable to all types of land and air vehicles.

### Prior art

The seat belt constitutes an indispensable safety device for all passengers of all types of vehicles. It is a device to protect the occupants of transportation vehicles which is activated in the case of collision, preventing passengers from being projected out of the vehicle and/or their bodies from being projected against hard parts of the vehicle. Using a seat belt is in fact the cheapest and easiest means to avoid serious injuries in case of accident. Its use is mandatory in all vehicles.

However, there are some cases in which, after an accident takes place, the passenger is unable to unlock the seat belt locking system and consequently is not able to leave the vehicle. Indeed, there are a significant number of passengers who die in car accidents due to situations of not being able to free themselves from the seat belt.

The existing systems have disadvantages that are now intended to be minimized and/or overcome. Document DE 198 53 806 A1 discloses a seat belt cutting device wherein two single edged blades are projecting from the lower part of a cover and guided in a recess of a body in such a way that when the cover is rotated the blades are cutting the belt.

### Summary of the invention

The main objective of the invention is to create a device especially designed to allow a passenger with a fastened seat belt on, after an accident in which he cannot unlock the locking system, to be able to cut the said belt in a simple and safe way in order to leave the damaged vehicle. Other objectives of the invention consist of designing a seat belt cutter which is assembled on the seat belt itself, cannot cause cutting accidents due to incorrect use and cannot be inadvertently activated. The present invention is defined by the features of claim 1.

Other objectives and advantages may be understood in the course of the following description and in the attached drawings, which, without limitation, represent:

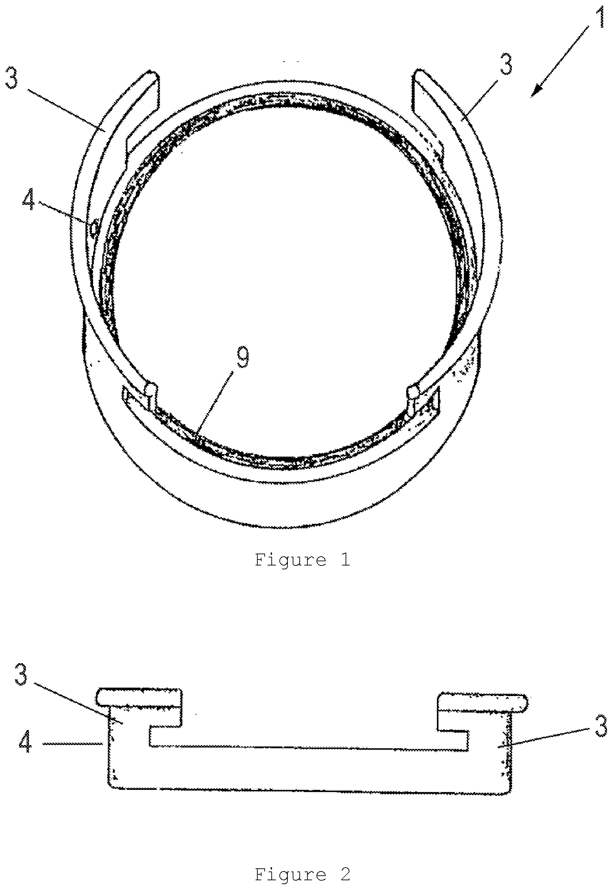

- In figure 1, a perspective view of the body of the cutter;
- In figure 2, a view in elevation of the body represented in figure 1;

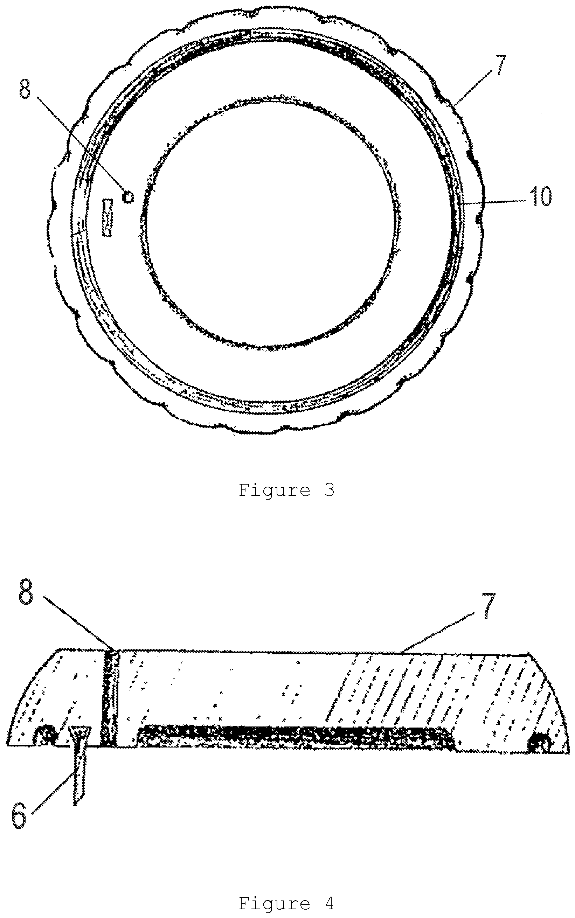

- In figure 3, a plan view of the cover of the said body of the cutter;
- In figure 4, a view in elevation of the said cover;

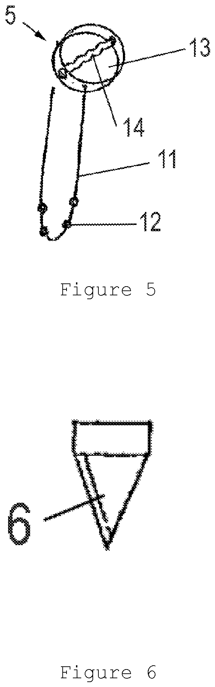

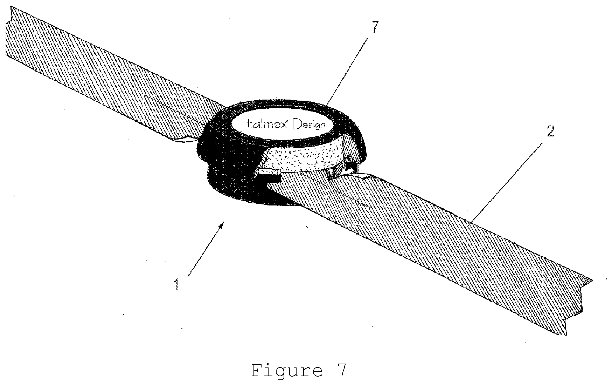

- In figure 5, a perspective view of the safety means of the cutter; and
- In figure 6, a perspective view of a seat belt with the cutting device of the invention, properly assembled.

### Detailed description of an embodiment of the present invention

As may be observed in the figures, the cutting device of the invention is constituted by a body (1), a cover (7) of the body (1), a blade (6) and safety means (5).

The said body (1) constitutes the element through which the belt (2) slides. For this purpose, the body (1) is provided with two flaps (3) in which the belt sliding guides are configured. The body (1) also has a hole (4) to insert safety means and a guide (9) for the blade (6), as described below.

The cover (7) has on its lower side a flap (10) that guides the movement inside the flaps (3). On the upper side of the cover a hole (4) is provided for the passage of the safety means (5). The said cover (7) also has a blade (6) which is duly embedded in the cover, being embedded at the time of injection of the cover.

As may be understood from the foregoing description, the belt (2) is assembled in a sliding way in the body (1) and the cover (7) will fit onto the body with the possibility of rotation inside the flaps (3) of the body, which serve as a rotation guide for the said cover (7). The blade (6) "works" in a recess/guide (9) of the body (1). The assembly of the cover (7) on the body (1), after the fastening of the belt (2) in the respective sliding guide, prevents the belt, when being cut, from crumpling and forming wrinkles that would hinder the cutting action. This is possible given that the flap (10), once the cover is mounted on the body, will be placed immediately over the belt, not allowing it to form wrinkles.

The said blade (6), duly embedded in the cover (7), is a double-edged blade and it projects from the cover in order to fit into the guide of the body (1).

In case of inadvertent activation of the device and cutting of the belt, safety means (5) are provided. These are constituted preferably by a strap (11) that has small spheres (12) along its length and by a small circular part (13) with a hole (14) through which the said strap (11) passes. This strap, preferably of plastic material, preferably nylon, is inserted in the lateral hole (4) existing in the lateral wall of the body (1), in the hole (8) of the said cover (7) and in the hole (14) of the circular part (13). This part (13), which functions as a "seal", contains in its hole (14) small grooves to prevent the sliding of the strap (11), i.e. to retain the small spheres (12).

Once the whole device has been mounted, the user/passenger can rotate the cover on the body, breaking the safety seal and cutting the belt. It can be rotated in any direction. Rotation and the corresponding cutting cannot occur inadvertently because it is necessary to exert some force for the strap (11) to be pulled and cut from the safety means (5). Therefore, it is very difficult for a child to activate the cutting device. In other words, the activation of the device always requires a deliberate action. Until the breaking of the safety seal, i.e. of the strap (11) of the part (13), the cover cannot be easily rotated on the body to proceed with the cutting of the belt.

In addition, the components of the device described above are preferably of plastic material, preferably polyurethane, with a circular configuration, and their dimensions will be suitable for the seat belts to which they are applied.

## Claims

1. Seat belt cutting device comprising:
- a body (1) through which a belt (2) slides, provided with two flaps (3) that form guides for the sliding of the belt and a hole (4) for the insertion of safety means (5);
- a cover (7) provided with a flap (10) that functions as a peripheral guide and engages with the flaps (3) of the body (1), said cover being rotatable on body (1)**,** and provided with a hole (8) for the passage of safety means (5);
wherein the seat belt cutting device
- further comprises a double-edged blade (6) embedded in the cover (7) so as to project from the lower part of the cover (7);
- the body (1) is provided with a recess/guide (9) for the blade (6) in such a way that, when the said cover (7) is rotated, the blade (6) moves peripherally cutting of the belt (2);
- the safety means (5) are constituted by a strap (11) that has spheres (12) along its length and by a circular part (13) with a hole (14);
- said strap (11) being insertable in the hole (4) of the body (1), in the hole (8) of the said cover (7) and in the hole (14) of the circular part (13) and said strap (11) being pulled out of the circular part (13) when the cover (7) is rotated on the body (1) cutting of the belt (2).

2. Seat belt cutting device, according to the previous claim, **characterized in that** the said cover (7) fits onto the said body (1) with the possibility of rotation inside the flaps (3) of the body, the said flaps serving as a rotation guide for the said cover (7).

3. Seat belt cutting device, according to the previous claim, **characterized in that** the said strap (11) is preferably made of plastic material, preferably nylon

4. Seat belt cutting device, according to the previous claims, **characterized in that** the said hole (14) of the circular part (13) contains small grooves to retain the small spheres (12).

5. Seat belt cutting device, according to the previous claims, **characterized in that** the body (1) and the cover (7) are circular.

## Patentansprüche

1. Sicherheitsgurtschneidevorrichtung, die folgendes umfasst:
- ein Körper (1), durch den ein Gurt (2) gleitet, ausgestattet mit zwei Klappen (3), die Führungen für das Gleiten des Gurtes und eine Bohrung (4) für die Einführung von Sicherheitsmitteln (5) formem;
- eine Deckung (7) mit einer Klappe (10), die als eine Peripherieführung und mit den Klappen (3) des Körpers (1) fungieren, vorgesehen, die besagte Deckung ist auf dem Körper (1) drehbar und mit einer Bohrung (8) für den Durchlass von Sicherheitsmitteln (5) vorgesehen,
worin die Sicherheitsgurtschneidevorrichtung
- weiterhin in der Deckung (7) eingebettet eine zweischneidige Klinge (6) umfasst**,** so dass sie vom unteren Teil der Deckung (7) hinausragt;
- der Körper (1) ist mit einer Vertiefung/Führung (9) für die Klinge (6) vorgesehen, auf solche Weise, dass, wenn die besagte Deckung (7) gedreht wird, die Klinge (6) sich peripher dreht und den Gurt (2) schneidet;
- die Sicherheitsmittel (5) sind aus einem Band (11), welches Kugeln (12) entlang seiner Länge hat und aus einem kreisförmigen Teil (13) mit einer Bohrung (14) zusammengestellt;
- das besagte Band (11) ist in die Bohrung (4) des Körpers (1), in die Bohrung (8) der besagten Deckung (7) und in die Bohrung (14) des kreisförmigen Teils (13) einfügbar und das besagte Band (11) wird aus dem kreisförmigen Teil (13) herausgezogen, wenn die Deckung (7) auf dem Körper (1) gedreht wird und den Gurt (2) schneidet.

2. Sicherheitsgurtschneidevorrichtung, nach vorherigem Anspruch, **dadurch gekennzeichnet, dass** die besagte Deckung (7) auf den besagten Körper (1) passt, um die Drehungen innerhalb der Klappen (3) des Körpers zu ermöglichen, die besagten Klappen dienen als Drehungsführungen für die besagte Deckung (7).

3. Sicherheitsgurtschneidevorrichtung, nach vorherigem Anspruch, **dadurch gekennzeichnet, dass** das besagte Band (11) vorzugsweise aus Kunststoffmaterial, vorzugsweise Nylon, hergestellt ist.

4. Sicherheitsgurtschneidevorrichtung, nach vorherigen Ansprüchen, **dadurch gekennzeichnet, dass** die besagte Bohrung (14) des kreisförmigen Teils (13) kleine Rillen, um die kleinen Kugeln (12) zu halten, enthält.

5. Sicherheitsgurtschneidevorrichtung, nach vorherigen Ansprüchen, **dadurch gekennzeichnet, dass** der Körper (1) und die Deckung (7) kreisförmig sind.

## Revendications

1. Un dispositif de coupe de ceinture de sécurité comprenant :
- un corps (1) à travers lequel une ceinture (2) coulisse, pourvu de deux languettes (3) servant de guides pour le glissement de la ceinture et d'un trou (4) destiné à l'insertion d'un moyen de sécurité (5) ;
- un couvercle (7) pourvu d'une languette (10) qui fonctionne comme guide périphérique et qui vient en prise avec les languettes (3) du corps (1), ledit couvercle pouvant tourner sur le corps (1), et pourvu d'un trou (8) pour le passage du moyen de sécurité (5) ;
où le dispositif de coupe de ceinture de sécurité
- comprend en outre une lame à double tranchant (6) incorporée dans le couvercle (7) de façon à faire saillie de la partie inférieure du couvercle (7) ;
- le corps (1) est pourvu d'un évidement/guide (9) pour la lame (6) de telle sorte que lorsque ledit couvercle (7) est tourné, la lame (6) se déplace de manière périphérique de façon à couper la ceinture (2) ;
- le moyen de sécurité (5) est constitué d'une sangle (11) dotée de sphères (12) le long de sa longueur et d'une pièce circulaire (13) avec un trou (14) ;
- ladite sangle (11) peut être introduite dans le trou (4) du corps (1), dans le trou (8) dudit couvercle (7) et dans le trou (14) de la pièce circulaire (13), ladite sangle étant arrachée de ladite pièce circulaire (13) lorsque le couvercle (7) est tourné sur le corps (1) de façon à couper la ceinture (2) ;

2. Un dispositif de coupe de ceinture de sécurité, selon la revendication précédente, **caractérisé en ce que** ledit couvercle (7) s'ajuste sur ledit corps (1) avec la possibilité de rotation à l'intérieur des languettes (3) du corps, lesdites languettes servant de guide de rotation pour ledit couvercle (7).

3. Un dispositif de coupe de ceinture de sécurité, selon la revendication précédente, **caractérisé en ce que** ladite sangle (11) est faite de préférence d'une matière plastique, de préférence le nylon.

4. Un dispositif de coupe de ceinture de sécurité, selon les revendications précédentes, **caractérisé en ce que** ledit trou (14) de la pièce circulaire (13) est dotée de petites rainures pour retenir les petites sphères (12).

5. Un dispositif de coupe de ceinture de sécurité, selon les revendications précédentes, **caractérisé en ce que** le corps (1) et le couvercle (7) sont circulaires.
